# EUROPÄISCHE PATENTSCHRIFT

(11) **EP 1 114 853 B1**
(45) Veröffentlichungstag und Bekanntmachung des Hinweises auf die Patenterteilung: **15.09.2004**
(21) Anmeldenummer: 00125365.7
(22) Anmeldetag: 01.12.2000
(51) Int. Cl.: C09J 7/04, D04H 1/48

(54) **Textiles Klebeband**
Adhesive textile tape
Ruban adhésif textile

(30) Priorität: 05.01.2000 DE 20000130 U
(43) Veröffentlichungstag der Anmeldung: 11.07.2001
(73) Patentinhaber: Coroplast Fritz Müller GmbH & Co. KG, 42279 Wuppertal (DE)
(72) Erfinder: Lodde, Christoph, 44225 Dortmund (DE)
(74) Vertreter: Patentanwälte Dr. Solf & Zapf

(56) Entgegenhaltungen:
- EP-A- 0 829 222
- EP-A- 0 942 057
- US-A- 4 308 313
- US-A- 5 631 073

## Beschreibung

Die vorliegende Erfindung betrifft ein textiles Klebeband bestehend aus einem Klebebandträger aus einem textilen, mechanisch verfestigten Vliesmaterial und einer mindestens einseitigen Klebebeschichtung.

Es sind bereits textile Klebebänder der eingangs beschriebenen Art bekannt, bei denen der mechanisch verfestigte Vliesträger aus einem Nähvlies besteht. Weiterhin sind Klebebänder bekannt, bei denen die mechanische Verfestigung des Vliesträgers durch eine Wasserstrahl- oder Luftstrahlverfestigung erfolgt ist.

Diesen bekannten Klebebändern ist der Nachteil gemeinsam, dass sie ein relativ hohes Flächengewicht größer als 60g/m² besitzen, damit ausreichende Reissfestigkeiten erreicht werden. Aufgrund des relativ hohen Flächengewichtes ergeben sich hohe Materialkosten.

Der vorliegenden Erfindung liegt die Aufgabe zugrunde, ein textiles Klebeband zu fertigen, das bei gegenüber den bekannten textilen Klebebändern verringerten Materialkosten gleiche mechanische Eigenschaften wie die bekannten Klebebänder, insbesondere eine ausreichende Reissfestigkeit besitzt.

Erfindungsgemäss wird dies dadurch erreicht, dass das Vliesmaterial ein Flächengewicht kleiner/gleich 60g/m² besitzt und mit einem thermoplastischen Harz imprägniert ist. Durch diese erfindungsgemässe Harzimprägnierung wird eine Kohäsion der Vliesfasern erreicht. Durch diese Harzimprägnierung wird der bei geringen Flächengewichten durch mechanische Verfestigung fühlbare niedrige Festigungsgrad ausgeglichen. Je nach Konzentration der Harzimprägnierung können Vliese mit hoher Zugfestigkeit oder mit niedrigerer Zugfestigkeit hergestellt werden. Die Harzimprägnierung esitzt ein Flächengewicht von 1 bis 5g/m². Für die mechanische Verfestigung kann eine Vernadelung in einem Nadelbett vorgesehen sein, es kann jedoch auch eine Verfestigung mittels Wasserstrahl- und/oder Luftstrahltechnik vorgenommen werden. Als Klebebeschichtung können Naturkautschukkleber, Synthesekautschukkleber, Acrylatkleber oder UV-vernetzter Acrylatkleber eingesetzt werden. Die Harzimprägnierung hat des weiteren die Aufgabe, die Chemikalienbeständigkeit des Vlieses zu erhöhen.

Vorteilhafte Ausführungen des erfindungsgemässen textilen Klebebandes sind in den Unteransprüchen enthalten.

In der anliegenden Zeichnung ist ein Ausführungsbeispiel eines erfindungsgemässen Klebebandes dargestellt.

Gemäß dieser Zeichnung besteht ein erfindungsgemässes textiles Klebeband aus einem textilen Klebebandträger 1, auf dem einseitig eine Klebebeschichtung 2 aufgebracht ist. Der textile Klebebandträger 1 besteht aus einem textilen, mechanisch verfestigtem Vliesmaterial. Bei diesem Vliesmaterial handelt es sich insbesondere um einen in einem Nadelbett vernadelten Faservlies. Hierbei werden durch senkrechten Einstieg einer Vielzahl von in einem Nadelbett angeordneten mit Widerhaken versehenen Nadeln der aus einzelnen relativ kurzen Fasern gebildetem Faserstoff verfestigt. Als Fasermaterial können Naturfasern, insbesondere Viskosefasern, Polyester- oder Propylenfasern verwendet werden. Ebenfalls liegt es im Rahmen der Erfindung, ein Fasergemisch aus mindestens zwei der vorstehenden Fasermaterialien zu verwenden. Das erfindungsgemäss verwendete Vliesmaterial besitzt ein Flächengewicht kleiner/gleich 60g/m². Bei derartigen Flächengewichten kann durch die mechanische Verfestigung kein ausreichend hoher Verfestigungsgrad erzielt werden, damit das fertige Klebeband eine hinreichende Reissfestigkeit erreicht. Darüber hinaus ist die Gefahr einer Löcherbildung um so höher, je geringer das Flächengewicht ist. Erfindungsgemäss ist nun vorgesehen, dass das mechanisch verfestigte Vliesmaterial mit einem thermoplastischen Harz imprägniert wird. Eine derartige Imprägnierung kann insbesondere im Tränk- oder Sprühverfahren erfolgen. Die Imprägnierung besiht ein Flächengewicht von 1 bis 5g/m². Als Imprägnierungsmaterialien kommen thermoplastische Harze in Frage, und insbesondere Acrylatharze oder Polyurethanharze. In Abhängigkeit von der erfindungsgemäss vorgesehenen Harzkonzentration können mechanisch verfestigte Klebebandträger mit hoher Zugfestigkeit oder mit niedrigerer Zugfestigkeit hergestellt werden.

Die aufgebrachte Klebebeschichtung besteht vorteilhafterweise aus einem Naturkautschukkleber, einem Synthesekautschukkleber, Acrylatkleber oder UV-vernetzbarem Acrylatkleber.

Als Einsatzgebiete des erfindungsgemässen textilen Klebebandes sind Automobilindustrie, das Handwerk und der Hobbybereich vorgesehen.

Als Wickelband eignet sich insbesondere ein textiles Klebeband bestehend aus einem harzimprägnierten Polyethylen-Vliesfasermaterial mit einem Flächengewicht von 40g/m² und einer Klebebeschichtung aus einem Synthesekautschukkleber mit einem Flächengewicht von 130g/m².

Soll ein erfindungsgemässes Klebeband beispielsweise als Masking-Tape verwendet werden, so bietet sich vorteilhafterweise die Verwendung eines Polyethylen-Vlieses mit Harzimprägnierung an, das ein Flächengewicht von 50g/m² besitzt. Die Klebebeschichtung besteht hierbei aus einem UV-vernetzten Acrylatkleber mit einem Flächengewicht von 100g/m².

Das erfindungsgemässe Klebeband zeichnet sich zudem durch gute Abrolleigenschaften aus, da durch die Harzimprägnierung die Klebefähigkeit der Klebeschicht nicht beeinträchtigt wird, jedoch andererseits verhindert wird, dass beim Abrollen des Klebebandes sich die Vliesfasern aus dem Verbund ablösen und herausgerissen werden. Weiterhin verhindert die Harzimprägnierung ein Durchbluten, d. h. ein Eindringen bzw. Durchdringen der Klebebeschichtung durch das textile Trägermaterial.

Das erfindungsgemässe textile Klebebandmaterial zeichnet sich durch geringe Materialkosten aus, da der Kostenanteil des textilen Vliesmateriales entscheidend an den Gesamtkosten ist und durch das erfindungsgemäss geringe Flächengewicht des Textilmateriales ein entscheidener Kostenvorteil erreicht wird.

Die vorliegende Erfindung ist nicht auf das beschriebene Ausführungsbeispiel beschränkt. Es kann auch eine weitere Ausrüstung des erfindungsgemässen Klebebandes beispielsweise mit einem Flammschutzmittel vorgesehen sein.

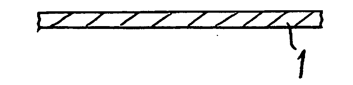

## Patentansprüche

1. Textiles Klebeband bestehend aus einem Klebebandträger (1), aus einem imprägnierten, textilen, mechanisch verfestigtem aus Fasern gebildeten Vliesmaterial mit einer mindestens einseitigen Klebebeschichtung (2), wobei das Vliesmaterial ein Flächengewicht kleiner/gleich 60 g/m² besitzt,
**dadurch gekennzeichnet, dass** der Klebebandträger (1) mit einem Flächengewicht von 1 bis 5 g/m² derart mit einem thermoplastischen Harz imprägniert ist, dass durch die Harzimprägnierung eine Kohäsion der Fasern erreicht und ein Eindringen der Klebebeschichtung (2) in den Klebebandträger (1) verhindert ist.

2. Klebeband nach Anspruch 1,
**dadurch gekennzeichnet,dass** das Vliesmaterial durch Vernadelung in einem Nadelbett verfestigt ist.

3. Klebeband nach Anspruch 1,
**dadurch gekennzeichnet,dass** das Vliesmaterial durch Luft- und/oder Wasserstrahlen verfestigt ist.

4. Klebeband nach einem der Ansprüche 1 bis 3,
**dadurch gekennzeichnet**, dassdas Vliesmaterial aus Viskosefasern, Polyesterfasern oder Propylenfasern oder aus einem Fasergemisch aus mindestens zwei der vorstehenden Fasermaterialien besteht.

5. Klebeband nach einem der Ansprüche 1 bis 4
**dadurch gekennzeichnet**, dassdie Klebebeschichtung (2) ein Naturkautschukkleber, ein Synthesekautschukkleber, ein Acrylatkleber oder ein UV-vernetzbarer Acrylatkleber Verwendung findet.

6. Klebeband nach einem der Ansprüche 1 bis 5
**dadurch gekennzeichnet, dass** das Flächengewicht der Klebebeschichtung (2) ca. 90 bis 150g/m², insbesondere 100g/m² bis 130g/m² beträgt.

7. Klebeband nach einem der Ansprüche 1 bis 6
**dadurch gekennzeichnet, dass** als textiles Vliesmaterial ein PET-Vlies verwendet wird, das ein Flächengewicht von 40g/m² besitzt sowie die Klebebeschichtung aus einem Synthesekautschukkleber mit einem Flächengewicht von 130g/m² besteht.

8. Klebeband nach einem der Ansprüche 1 bis 6
**dadurch gekennzeichnet, dass** das textile Vliesmaterial aus einem PET-Vlies besteht und ein Flächengewicht von 50g/m² aufweist und die Klebebeschichtung aus einem UV-vernetzbaren Acrycatkleber mit einem Flächengewicht von 150g/m² besteht.

## Claims

1. Textile adhesive tape comprising an adhesive tape backing (1) comprising an impregnated textile, mechanically consolidated non-woven material formed from fibres and having an adhesive coating (2) on at least one side, the non-woven material possessing a weight of less than or equal to 60 g/m², **characterized in that** the adhesive tape backing (1) is impregnated at a weight of from 1 to 5 g/m² with a thermoplastic resin in such a way that the resin impregnation effects cohesion of the fibres and prevents the adhesive coating (2) penetrating the adhesive tape backing (1).

2. Adhesive tape according to Claim 1, **characterized in that** the non-woven material has been consolidated by needling in a needle bed.

3. Adhesive tape according to Claim 1, **characterized in that** the non-woven material has been consolidated by means of jets of air and/or water.

4. Adhesive tape according to one of Claims 1 to 3, **characterized in that** the non-woven material comprises viscose fibre, polyester fibre or propylene fibre or a fibre blend of at least two of the above fibre materials.

5. Adhesive tape according to one of Claims 1 to 4, **characterized in that** as the adhesive coating (2) a natural rubber adhesive, a synthetic rubber adhesive, an acrylate adhesive or a UV-crosslinkable acrylate adhesive is used.

6. Adhesive tape according to one of Claims 1 to 5, **characterized in that** the weight of the adhesive coating (2) is from about 90 to 150 g/m², in particular from 100 g/m² to 130 g/m².

7. Adhesive tape according to one of Claims 1 to 6, **characterized in that** a PET non-woven possessing a weight of 40 g/m² is used as textile non-woven material and the adhesive coating comprises a synthetic rubber adhesive with a weight of 130 g/m².

8. Adhesive tape according to one of Claims 1 to 6, **characterized in that** the textile non-woven material comprises a PET non-woven and has a weight of 50 g/m² and the adhesive coating comprises a UV-crosslinkable acrylate adhesive with a weight of 150 g/m².

## Revendications

1. Ruban adhésif textile composé d'un support de ruban adhésif (1), d'une matière non tissée formée de fibres, imprégnée, textile, consolidée mécaniquement, avec une enduction de colle (2) au moins sur une face, la matière non tissée possédant un poids par unité de surface inférieur ou égal à 60 g/m², **caractérisé en ce que** le support de ruban textile (1) possédant un poids par unité de surface de 1 à 5 g/m² est imprégné d'une résine thermoplastique de telle manière que, par l'imprégnation de résine, on obtienne une cohésion des fibres et on évite la pénétration de l'enduction de colle (2) dans le support de ruban adhésif (1).

2. Ruban adhésif selon la revendication 1,
**caractérisé en ce que** la matière non tissée est consolidée par aiguilletage dans un lit d'aiguilles.

3. Ruban adhésif selon la revendication 1,
**caractérisé en ce que** la matière non tissée est consolidée par des jets d'air et/ou d'eau.

4. Ruban adhésif selon une des revendications 1 à 3,
**caractérisé en ce que** la matière non tissée est faite de fibres de viscose, de fibres de polyester ou de fibres de polypropylène ou d'un mélange de fibres composé d'au moins deux des matières fibreuses précédentes.

5. Ruban adhésif selon une des revendications 1 à 4,
**caractérisé en ce que** l'enduction de colle (2) utilise une colle au caoutchouc naturel, une colle au caoutchouc synthétique, une colle d'acrylate ou une colle d'acrylate réticulable par les UV.

6. Ruban adhésif selon une des revendications 1 à 5,
**caractérisé en ce que** le poids par unité de surface de l'enduction de colle (2) vaut environ 90 à 150 g/m², en particulier 100 g/m² à 130 g/m².

7. Ruban adhésif selon une des revendications 1 à 6,
**caractérisé en ce qu'**il y est utilisé, comme matière non tissée textile, un non tissé de PET qui possède un poids par unité de surface de 40g/m², et l'enduction de colle est composée d'une colle au caoutchouc synthétique ayant un poids par unité de surface de 130 g/m².

8. Ruban adhésif selon une des revendications 1 à 6,
**caractérisé en ce que** la matière non tissée textile est composée d'un non tissé de PET et possède un poids par unité de surface de 50 g/m², et l'enduction de colle est composée d'une colle d'acrylate réticulable par les UV ayant un poids par unité de surface de 150 g/m².
